# EUROPEAN PATENT APPLICATION

(11) **EP 2 632 018 A1**
(43) Date of publication of application: **28.08.2013**
(21) Application number: 12157106.1
(22) Date of filing: 27.02.2012
(51) Int. Cl.: H02J 7/00, H01M 2/10, H01R 13/00, H02M 7/00, H04B 1/38, H01R 31/06

(54) **Universal serial bus charging device**

(71) Applicant: Guangdong Jetfast Portable Lighting Co., Ltd., Guangdong (CN)
(72) Inventor: Liu, Yun-Zhao, Zhongshan (CN)
(74) Representative: Jeannet, Olivier

(57) **Abstract**

A charging device includes a charger (1) provided with a first transmission line (11) and a second transmission line (12) respectively on two ends thereof. Two respective first ends of the first and second transmission lines (11, 12) are connected with a circuit in the charger (1). The second end of the first transmission line (11) has a USB connector (2) so as to be connected with the USB interfaces of electronic products (6). The second end of the second transmission line (12) has a connector (3) which is connectable to a Lithium battery (5). The charger (1) charges the Lithium batteries (5) via the USB interfaces of the electronic products (6).

## Description

### BACKGROUND OF THE INVENTION

### 1. Field of the Invention

The present invention relates to a Universal Serial Bus charging device (USB charging device), and more particularly, to a USB charging device with a USB connector which is electronically connected to the USB interfaces of electronic products.

### 2. Description of Related Art

The cellular phones, the digital cameras and other portable electronic products are powered by electric power so that these products are sold with the charging devices which provide electric power to the electronic products. The existed charging devices can only be connected to the receptacles on the wall and the number of the receptacles on the wall may not meet the needs of the electronic products. When the electronic products need to be charged and no suitable receptacles available on site, the electronic products cannot be functioned properly.

The present invention intends to provide a charging device which provides the USB connector so as to be easily and conveniently connected to the USB interfaces of the electronic products, especially suitable for Lithium batteries.

### SUMMARY OF THE INVENTION

The present invention relates to a charging device and includes a charger provided with a first transmission line and a second transmission line respectively on two ends thereof. Two respective first ends of the first and second transmission lines are connected with a circuit in the charger. The second end of the first transmission line has a USB connector so as to be connected with the USB interfaces of electronic products. The second end of the second transmission line has a connector which is connectable to a Lithium battery. The charger charges the Lithium batteries via the USB interfaces of the electronic products.

The primary object of the present invention is to provide a charging device having a USB connector so as to be conveniently connected with the electronic products to charge the batteries especially for the Lithium batteries.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the charging device of the present invention;
Fig. 2 is a perspective view to show that the charging device of the present invention is charged by a laptop computer;
Fig. 3 is an exploded view to show another embodiment of the charging device of the present invention;
Fig. 4 is a perspective view to show that the charging device in Fig. 3 of the present invention is charged by a laptop computer;
Fig. 5 is an exploded view to show the charging device in Fig. 1 of the present invention is connected to an Alternative-Current charger, and
Fig. 6 is an exploded view to show that the charging device in Fig. 3 of the present invention is connected to an Alternative-Current charger.

### DETAILED DESCRIPTION OF THE PREFERRED EMBODIMENT

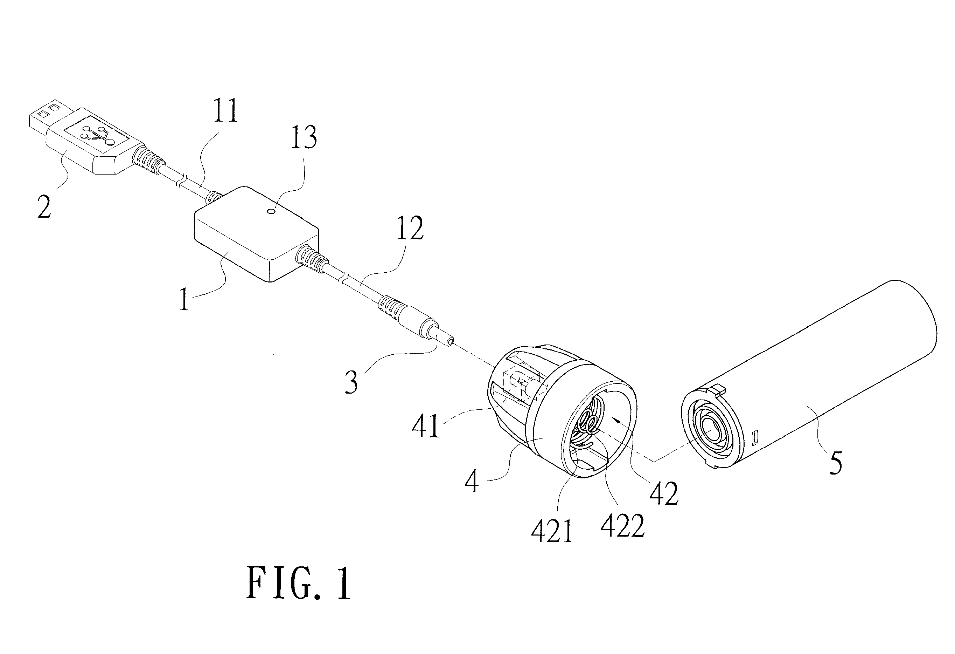

Referring to Fig. 1, the charging device of the present invention comprises a charger 1 and a first transmission line 11 and a second transmission line 12 are respectively connected to two ends of the charger 1. The two respective first ends of the first and second transmission lines 11, 12 are connected with a circuit in the charger 1. The second end of the first transmission line 11 has a USB connector 2 connected thereto and the second end of the second transmission line 12 has a terminal connector 3 connected thereto. The charger 1 has an index light 13 which is electrically connected to the circuit of the charger 1. The charger 1 has a battery connecting unit 4 which has a terminal receptacle 41 and a battery receptacle 42 on two ends thereof, the terminal receptacle 41 and the battery receptacle 42 are electronically connected to each other. The terminal receptacles 41 is connected to the connector 3 of the second transmission line 12, and the battery receptacle 42 has a positive pole member 421 and a negative pole member 422. The positive pole member 421 and the negative pole member 422 may be two respective springs so as to be connected with the positive pole and the negative pole of the Lithium battery 5.

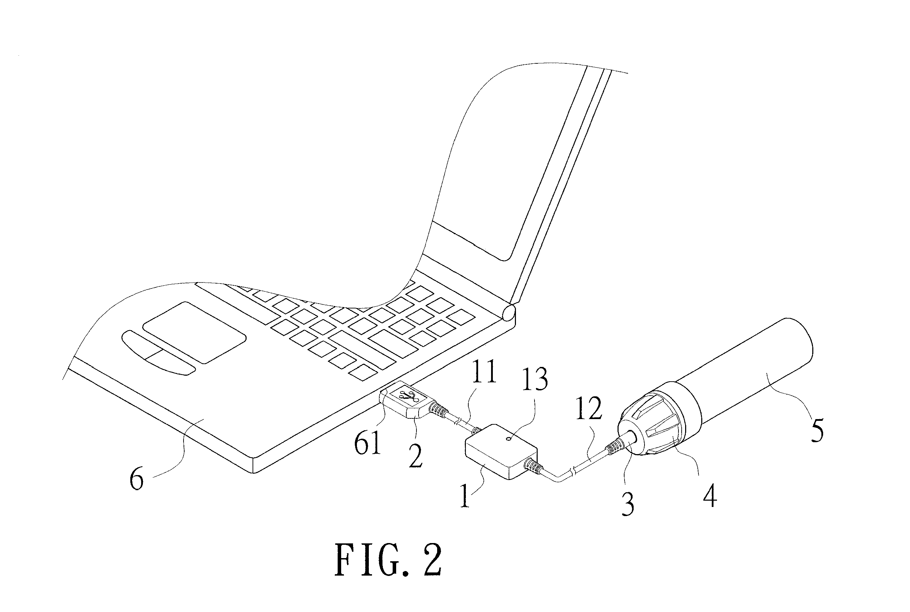

When the users want to charge the Lithium batteries of the cellular phones, digital cameras, Personal Digital Assistants or laptop computers, while no receptacles on the walls available, as shown in Fig. 2, the terminal connector 3 of the charger 1 is connected to the terminal receptacle 41 of the battery connecting unit 4, and the battery receptacle 42 of the battery connecting unit 4 is connected to the Lithium batteries 5 of the electronic product 6 to be charged. The USB connector 2 of the charger 1 is then connected to a USB receptacle 61 of the electronic product 6. The current of the electronic product 6 passes the USB connector 2 of the charger 1 and the first transmission line 11 and is connected to the circuit in the charger 1. The current then is connected to the battery connecting unit 4 via the terminal connector 3 of the second transmission line 12. The battery connecting unit 4 transfers the Direct Current to the Lithium batteries 5 of the electronic product 6 via the battery receptacle 42. The Lithium batteries 5 are then charged and the index light 13 on the charger 1 lights on to show its charging status. When the charging process to the Lithium batteries 5 is completed, the index light 13 on the charger 1 turns into green to acknowledge the users about the charging status.

When the charging process is completed, the users remove the Lithium batteries 5 from the battery receptacle 42 of the battery connecting unit 4 and the Lithium batteries 5 can be installed to the electronic product 6 and provide power to the electronic product 6. The charging device allows the users to charge the Lithium batteries 5 of the electronic products 6 with USB receptacles 61 when needed.

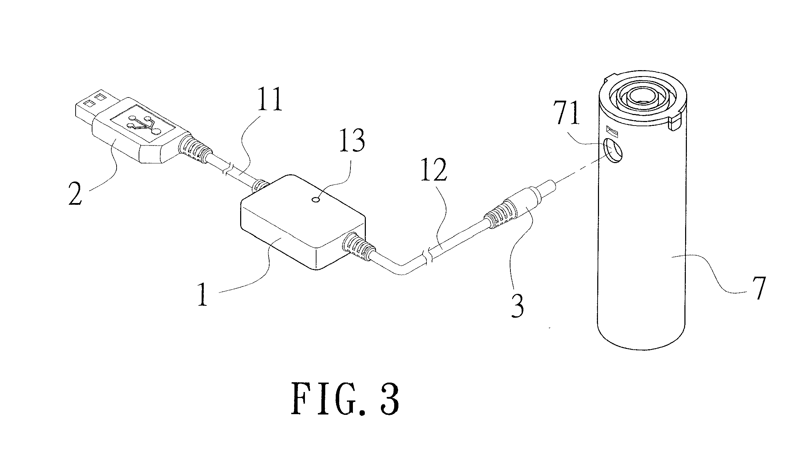

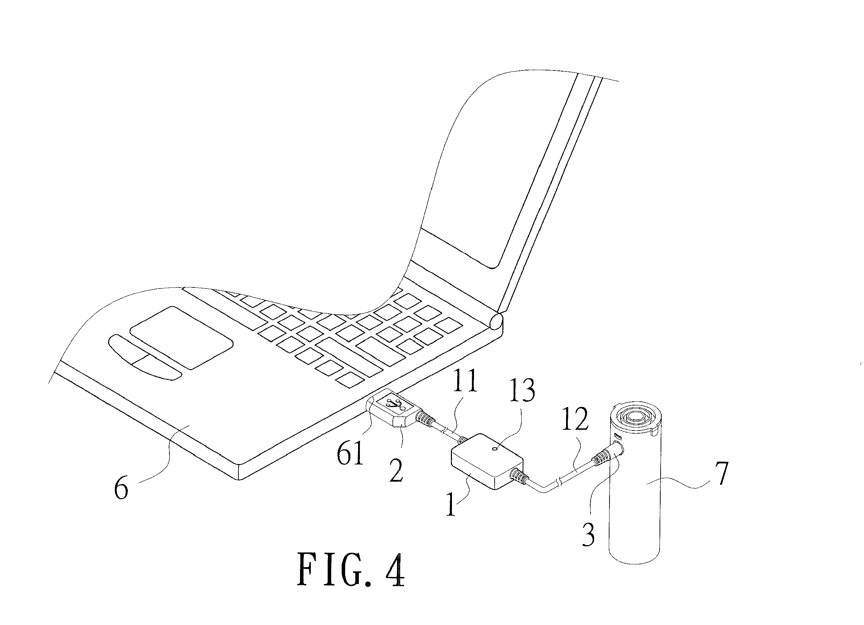

As shown in Figs. 3 and 4, the charging device can be cooperated with the Lithium battery 7 with a charging hole 71. The terminal connector 3 of the charger 1 is connected to the charging hole 71 of the Lithium battery 7 and the USB connector 2 of the changer 1 is connected to the USB receptacle 61 of the electronic product 6. The Lithium battery 7 is charged from the USB receptacle 61 of the electronic product 6.

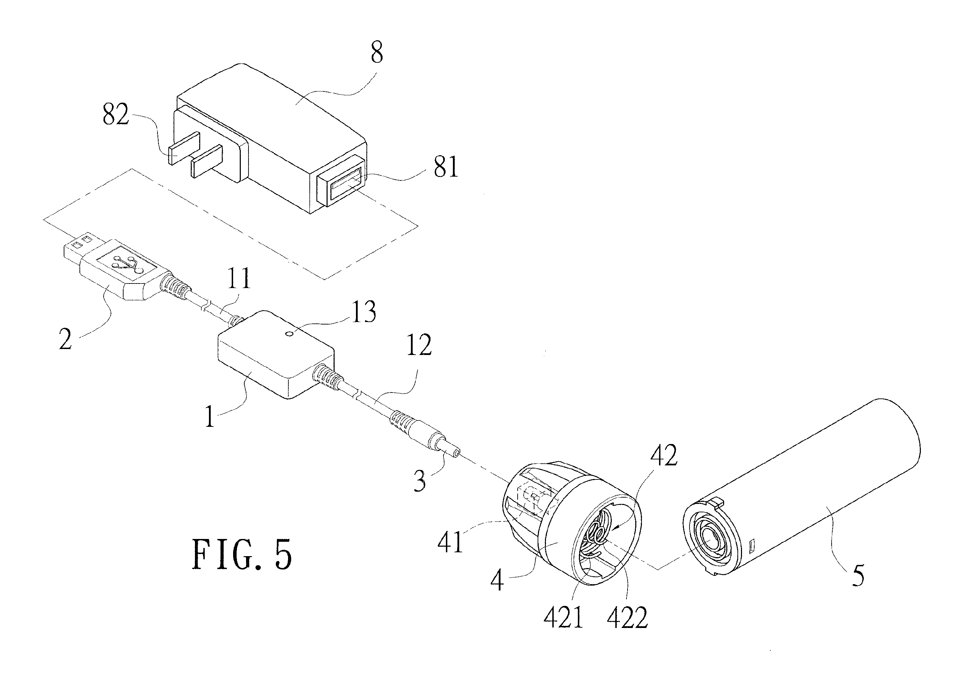

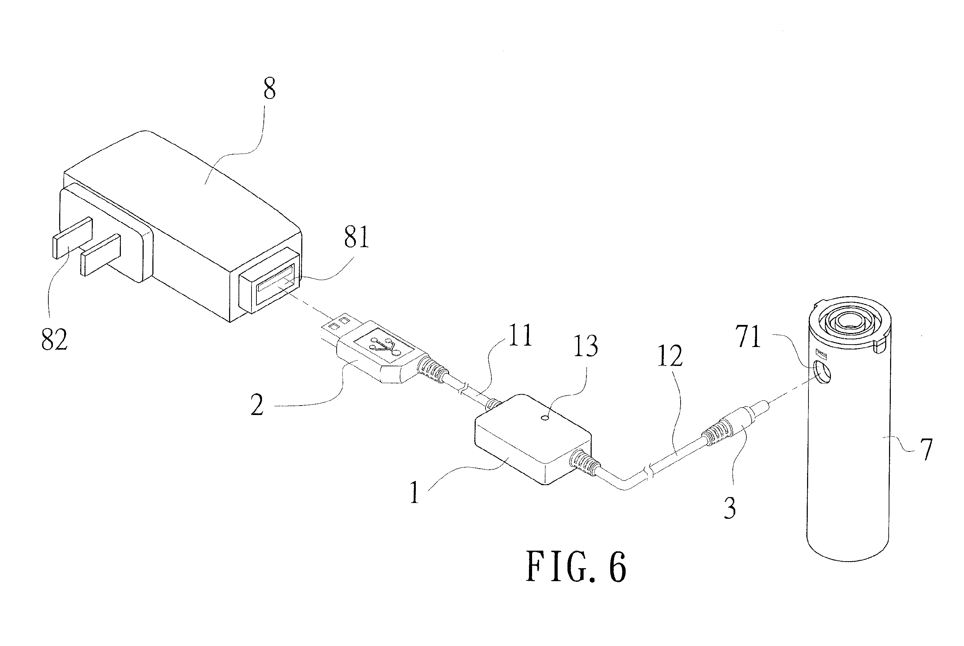

As shown in Figs. 5 and 6, the charging device can be cooperated with the receptacle on the wall and has an Alternative-Current charger 8 which has a USB receptacle 81. The USB receptacle 81 is connectable to the USB connector 2 of the charger 1. The Alternative-Current charger 8 further has legs 82 which are electrically connectable to the USB receptacle 81 of the Alternative-Current charger 8. A circuit for transferring the Alternative Current into Direct Current is connected between the legs 82 and the USB receptacle 81 of the Alternative-Current charger 8. When charging the Lithium batteries 5, the terminal connector 3 of the charger 1 is connected to the Lithium batteries 5 via the battery connecting unit 4 as shown in Fig. 5. Alternatively, the terminal connector 3 of the charger 1 is directly connected to the Lithium battery 7 with the charging hole 71 as shown in Fig. 6. The legs 82 of the Alternative-Current charger 8 are connected to the receptacle on the wall. The electric power from the receptacle on the wall passes through the USB connector 2 of the charger 1 via the Alternative-Current charger 8 and the first transmission line 11 and output via the circuit of the charger 1. The current then passes through the second transmission line 12 and charges the Lithium battery 5, 7 directly or indirectly connected with the terminal connector 3. The batteries 5, 7 are able to be charged by being connected with the receptacles on the wall.

While we have shown and described the embodiment in accordance with the present invention, it should be clear to those skilled in the art that further embodiments may be made without departing from the scope of the present invention.

## Claims

1. A charging device comprising:
a charger (1), a first transmission line (11) and a second transmission line (12) respectively connected to two ends of the charger (1), two respective first ends of the first and second transmission lines (11, 12) connected with a circuit in the charger (1), a second end of the first transmission line (11) having a USB (Universal Serial Bus) connector (2) connected thereto, a second end of the second transmission line (12) having a connector (3) connected thereto.

2. The charging device as claimed in claim 1, wherein the charger device has a battery connecting unit (4) which has two receptacles (41, 42) on two ends thereof, the two receptacles (41, 42) are electronically connected to each other, one of the receptacles is connected to the connector (3) of the second transmission line (12), the other receptacle (42) has a positive pole member and a negative pole member for being connected with a battery.

3. The charging device as claimed in claim 2 further comprising an Alternative-Current charger (8) which has a USB receptacle (81) which is connectable to the USB connector (2) of the charger (1), the Alternative-Current charger (8) having legs (82) which are electrically connectable to the USB receptacle (81) of the Alternative-Current charger (8).

4. The charging device as claimed in claim 3, wherein the charger (1) has an index light (13) which is electrically connected to the circuit of the charger (1).

5. The charging device as claimed in claim 4, wherein the second end of the second transmission line (12) has a terminal connector (3) connected thereto.

6. The charging device as claimed in claim 1 further comprising an Alternative-Current charger (8) which has a USB receptacle (81) which is connectable to the USB connector (2) of the charger (1), the Alternative-Current charger (8) having legs (82) which are electrically connectable to the USB receptacle (81) of the Alternative-Current charger (8).

7. The charging device as claimed in claim 6, wherein the charger (1) has an index light (13) which is electrically connected to the circuit of the charger (1).

8. The charging device as claimed in claim 7, wherein the second end of the second transmission line (12) has a terminal connector (3) connected thereto.

9. The charging device as claimed in claim 1, wherein the charger (1) has an index light (13) which is electrically connected to the circuit of the charger (1).

10. the charging device as claimed in claim 1, wherein the second end of the second transmission line (12) has a terminal connector (3) connected thereto.
